# EUROPÄISCHE PATENTANMELDUNG

(11) **EP 2 078 579 A1**
(43) Veröffentlichungstag der Anmeldung: **15.07.2009**
(21) Anmeldenummer: 08000413.8
(22) Anmeldetag: 10.01.2008
(51) Int. Cl.: B23K 1/00, B23P 6/04

(54) **Verfahren zum Löten eines Bauteils und Bauteil mit Löt- und Schweissstellen**

(71) Anmelder: SIEMENS AKTIENGESELLSCHAFT, 80333 München (DE)
(72) Erfinder: Wollnik, Adrian, 13585 Berlin (DE)

(57) **Zusammenfassung**

Die Erfindung betrifft die Reparatur eines Bauteils, bei dem ein Löteinsatz verwendet wird. Bei dem Stand der Technik diffundiert unerwünschter Weise Schmelzpunkterniedriger auf dem Löteinsatz aufgebrachte Schichten.

Dies wird verhindert, in dem der Spalt mittels artgleichen Material umschweißt wird.

## Beschreibung

Die Erfindung betrifft ein Verfahren zum Löten eines Löteinsatzes in einem Bauteil und ein Bauteil mit einer Löt- und Schweißstelle.

Bauteile, wie z.B. Turbinenschaufeln, weisen nach langer Benutzung oft Risse und sehr häufig ganze Rissfelder auf, die im Laufe des Betriebes durch Korrosion auftreten. Solche Bereiche müssen im Rahmen einer Schaufelreparatur komplett entfernt werden. Die dadurch entstehende Vertiefung (Mulde) muss in den nachkommenden Prozessschritten wieder aufgebaut werden, bevor das Bauteil für eine weitere Revisionsperiode einsetzbar wird.

Dazu gibt es verschiedene Reparaturprozesse wie das reine Löten, was bei größeren Mulden nicht angebracht ist.

Beim Hochtemperaturlöten wird der Lotwerkstoff auf die zu reparierende Stellen aufgebracht und mittels Wärmeeinwirkung mit dem Grundwerkstoff verbunden. Jedoch weist beim üblichen Lötverfahren für Reparatur von Bauteilen für Hochtemperaturanwendungen das Lötmaterial im Vergleich zum Grundwerkstoff der Schaufel wesentlich schlechtere Materialeigenschaften auf. Außerdem enthält der Lotwerkstoff Elemente (wie z. B. Bor), die die Schmelztemperatur senken und mit einer aufzutragenden abschließenden Beschichtung (z.B. MCrAlY-Korrosionsschutzschicht) Sprödphasen (wie z.B. Chromborid) bilden. Solche Schichtsysteme weisen daher sehr schlechte mechanische Eigenschaften in Hochtemperaturbereich auf und auch die Oxidations- und Korrosionsschutzfunktion der Beschichtung wird dadurch verringert. Aus diesem Grund ist der Einsatz von solchen Reparaturverfahren stark limitiert.

Ein Auftragsschweißen muss in mehreren Lagen durchgeführt werden.

Beim WIG Schweißen es ist notwendig, den Prozess in einer sog. "Hot Box" durchzuführen, in der das Substrat bis zu ca. 1000°C vorgewärmt wird, um eine fehlerfreie Schweißverbindung zu erreichen. Die hohe Vorwärmtemperatur verursacht einen sehr starken Verzug, der beim späteren Einbau von reparierten Schaufeln zu Problemen führt. Die auftraggeschweißten Lagen sind meistens auch sehr dick, wodurch später ein erhöhter Arbeitsaufwand beim Wiederherstellen der Kontur verursacht wird. Es ist auch nicht möglich, beliebige Kombinationen von Grundwerkstoff und Schweißzusatzwerkstoff einzusetzen. Meistens werden Zusatzwerkstoffe verwendet, die schlechtere mechanische Eigenschaften aufweisen als der Grundwerkstoff. Damit werden auch die mechanischen Eigenschaften der reparierten Schaufeln insgesamt niedriger, was den späteren Einsatz von solchen Bauteilen limitiert.

Beim Laserauftragschweißen können zwar manche Bereiche ohne Vorwärmung geschweißt werden, jedoch müssen die zu reparierenden Stellen eine gewisse Mindestwandstärke aufweisen, weil bei einer starken Wanddickenunterschreitung der Laserschweißprozess nicht realisierbar ist. Zurzeit ist beim Laserschweißen von Grundwerkstoffen, die eine Vorwärmung benötigen, der Prozess sehr kompliziert und die Nachrüstungskosten sind sehr hoch.

Es ist daher Aufgabe der Erfindung ein Verfahren und ein Bauteil aufzuzeigen, was oben genannte Probleme überwindet.

Die Aufgabe wird gelöst durch ein Verfahren gemäß Anspruch 1 und einem Bauteil gemäß Anspruch 7, bei dem sowohl eine Lötung und eine Schweißung durchgeführt wird.

### Es zeigen:

- Figur 1, 2, 3: Abläufe des erfindungsgemäßen Verfahrens,
- Figur 4: eine Gasturbine,
- Figur 5: perspektivisch eine Turbinenschaufel,
- Figur 6: perspektivisch eine Brennkammer und

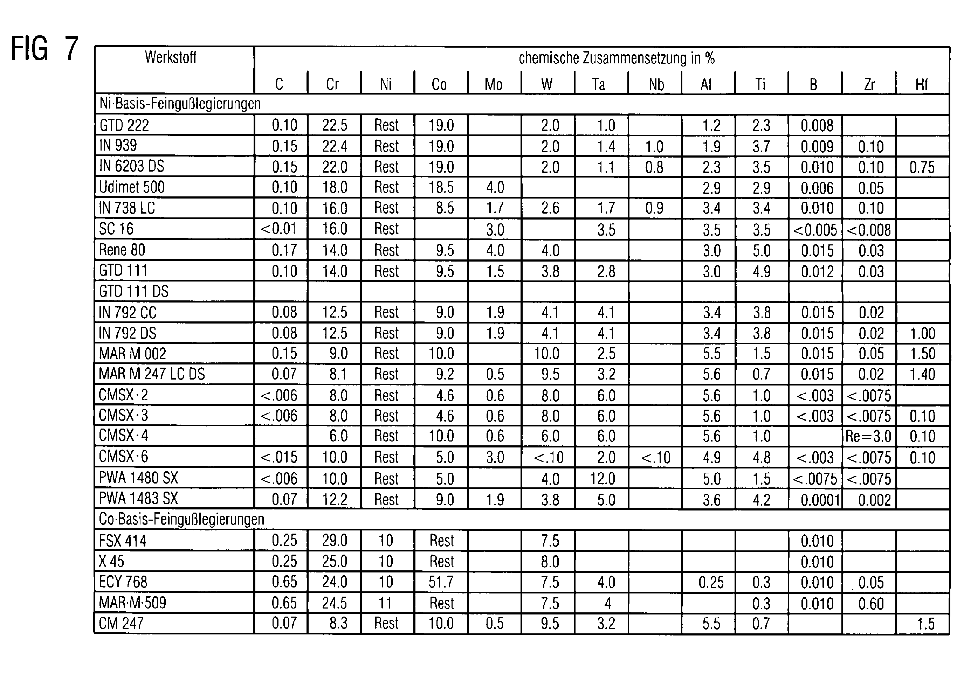

- Figur 7: eine Liste von Superlegierungen.

Die Figuren und die Beschreibung stellen nur Ausführungsbeispiele der Erfindung dar.

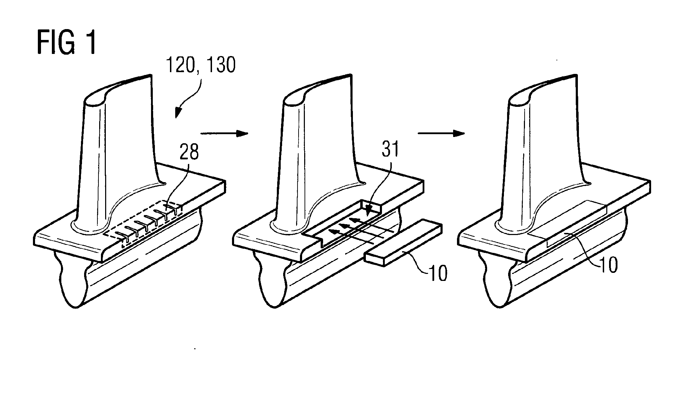

Figur 1 zeigt schematisch die Reparatur einer Turbinenschaufel 120, 130 als ein beispielhaftes Bauteil im gesamten Ablauf.

Ein erzeugter Materialabtrag 31 oder Mulde 31 in einem Rissfeld 28 einer Turbinenschaufel 120, 130 (als beispielhaftes Bauteil) kann mittels Löten mit sogenannten Loteinsätzen 10, vorzugsweise vorgesinterten Zusatzwerkstoffen wiederhergestellt werden.
Die Löteinsätze 10 werden vorzugsweise aus Nickel- und/oder Kobaltbasis-Superlegierungen hergestellt.

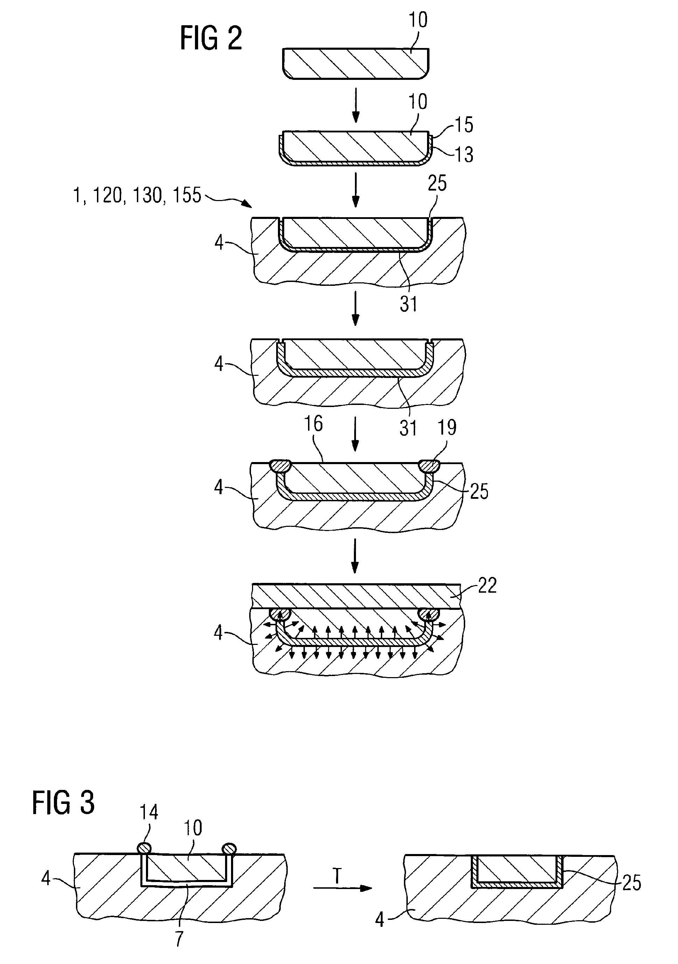

Als Herstellungsprozess für die Loteinsätze 10 kann vorzugsweise ein gängiges pulvermetallurgisches Verfahren (z.B. MIM, Pulverwalzen, Pressen, Sintern, HIP, etc.) oder auch Giessen und mechanische Bearbeitung eingesetzt werden. Jedoch ist dabei zu beachten, dass die Loteinsätze 10 größtenteils (>95wt%) aus dem gleichen Werkstoff wie die zu reparierende Turbinenschaufel 120, 130 hergestellt werden.
Die Form und Größe von solchen Löteinsätzen 10 sollte vorzugsweise so fabriziert werden, dass sie nach der späteren Beschichtung mit Lötwerkstoff 13 (Fig. 2) genau in die erzeugte Vertiefung 31 (Materialabtrag) im Grundwerkstoff der Turbinenschaufel 120, 130 hineinpassen. Aus diesem Grund wird der Materialabtragungsprozess, vorzugsweise bei der Schaufelreparatur, automatisiert werden, z.B. durch Senkerodieren mit standardisierten Elektroden oder CNC-Fräsen von diskretisierten Bereichen.
Die Passflächen des Löteinsatzes 10 werden vorzugsweise vor dem Verbinden mit dem Bauteil 120, 130 mit einem Lotwerkstoff 13 (Fig. 2) beschichtet.
Als Lotwerkstoff 13 können gängige Legierungen in Pulverform (vorzugsweise Körnung +10µm/-150µm) eingesetzt werden als auch Mischungen von Lötwerkstoff und Grundwerkstoffmaterial (bis zu 80% Anteil) in einer Pulverform.

Um die Oberfläche des Löteinsatzes 10 beschichten zu können, werden vorzugsweise gängige Verfahren eingesetzt wie z.B. pulvermetallurgische Verfahren (HIP, Pulverwalzen, etc.) oder Beschichtungsverfahren wie z. B. Kaltgasspritzen oder HVOF. Die Auswahl der Beschichtungsmethode hängt von der Größe und Form des Löteinsatzes 10 ab, z. B. einfache Grundwerkstoffplatten mit dünner Lötwerkstoffschicht können mittels Pulverwalzen hergestellt werden (Lötwerkstoff 13 in einer Pulverform wird vorzugsweise auf die Oberfläche des Löteinsatzes mittels Walzen aufgepresst). Löteinsätze 10 mit einer komplizierten geometrischen Form werden vorzugsweise mittels Kaltgasspritzen oder HVOF beschichtet werden, um eine gleichmäßige Auftragung des Lötwerkstoffes 13 auf der gesamten Passfläche des Löteinsatzes 10 zu gewährleisten. Abgesehen von der Beschichtungsmethode muss die aufgetragene Schicht des Lötwerkstoffes 13 vorzugsweise eine Dicke von 1,0mm ± 10% haben.

Diese Schicht kann vorzugsweise im nächsten Bearbeitungsschritt vorgesintert werden, um eine Haftung mit dem Grundwerkstoff des Löteinsatzes 10 zu erzeugen. Das Vorsintern kann durch Aufheizen im Ofen, vorzugsweise unter Schutzgas oder insbesondere im Vakuum, realisiert werden bis zu einer Temperatur, die 10°C - 40°C über der Schmelztemperatur des eingesetzten Lötwerkstoffes 13 liegt (jedoch unter Schmelztemperatur des Grundwerkstoffes) und Halten dieser Temperatur vorzugsweise für 10min - 30min. Danach erfolgt vorzugsweise eine Abkühlung bis auf Raumtemperatur.

Nach dem Vorsinterprozess kann der Löteinsatz 10 vorzugsweise erneut mechanisch bearbeitet und in die Form der Senkung 31 (Vertiefung) auf der Turbinenschaufel 120, 130 genau angepasst werden. Dabei können vorzugsweise erneut solche Verfahren zum Einsatz kommen wie Erodieren oder CNC- Fräsen. Nach der mechanischen Bearbeitung sollte die aufgetragene und vorgesinterte Lötwerkstoffschicht 15 vorzugsweise eine Dicke von 0,20mm - 0,70mm haben. Es ist auch dabei zu beachten, dass die Lötschicht 15 aus dem Randbereich (0,7mm - 1,5mm unter der Schaufeloberfläche) komplett entfernt werden muss, um den Auslauf des Lötwerkstoffes im Heißgasbereich der Schaufel 120, 130 zu vermeiden.

Die Schaufeloberfläche (Vertiefung 31) und die Oberfläche des Löteinsatzes 10 können vorzugsweise vor dem Löten gereinigt werden. Es können ähnliche Reinigungsverfahren eingesetzt werden, die als Oberflächenvorbereitung für konventionelles Engspaltlöten verwendet werden (z. B. HF-Reinigung [FIC] oder Glühung in H₂-Atmosphäre).

Die Löteinsätze 10 müssen vorzugsweise auf der Schaufel befestigt werden (z. B. mit Klammern) und erst danach kann das Reparaturlöten erfolgen.

Das Löten im Ofen wird vorzugsweise unter Schutzgasatmosphäre oder insbesondere im Vakuum durchgeführt werden.
Die Temperatur beim Löten ist abhängig von eingesetzter Lötlegierung und liegt in der Regel zwischen 40°C - 80°C über dem Schmelztemperaturbereich der Lötlegierung. Nach dem Reparaturlöten muss noch der Spalt im Übergangsbereich mittels WIG, Laser- oder Plasmaschweißen umgeschmolzen werden, um die mögliche Rissbildung in diesen Stellen zu verhindern und die Diffusion von temperatursenkenden Elementen in eine mögliche, anschließende MCrAlX-Beschichtung zu vermeiden (Fig. 2). Danach kann das Wiederherstellen der Kontur und Beschichtung der Schaufeloberfläche mit MCrAlX durchgeführt werden.

In Figur 2 ist schematisch der Ablauf des Verfahrens zum Einsatz des Löteinsatzes 10 in detaillierter Form gezeigt.

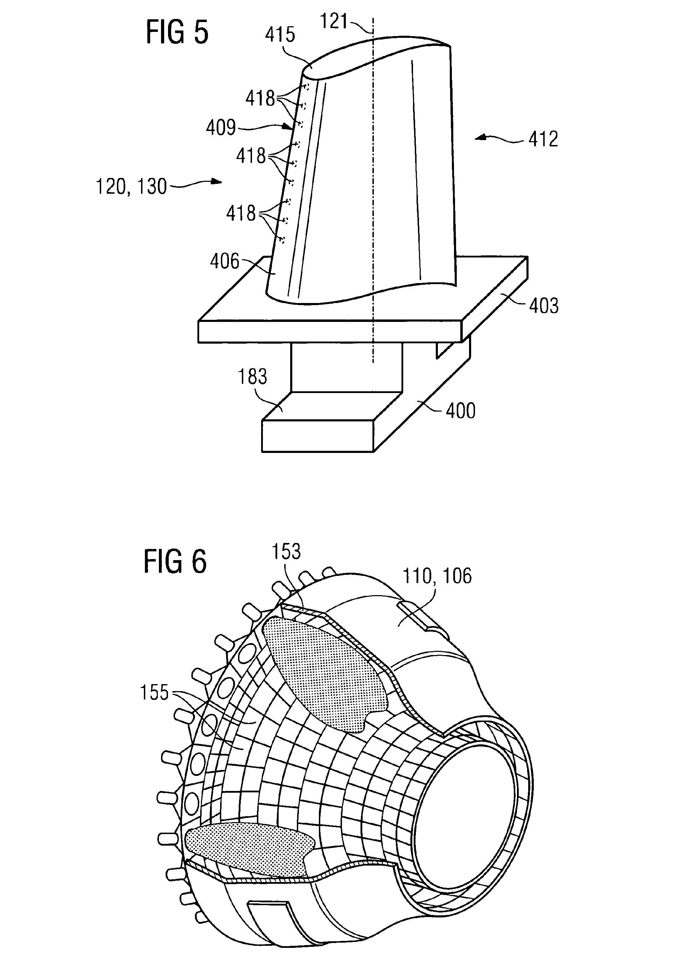

Das Bauteil 1, 120, 130, 155, vorzugsweise aus einer Superlegierung gemäß Figur 6, weist die Mulde 31 auf, die aufgefüllt werden muss. Die Mulde 31 wird mit dem Löteinsatz 10 aufgefüllt, der 10 vorzugsweise dasselbe Material wie das Substrat 4 des Bauteils 1, 120, 130, 155 aufweist, insbesondere daraus besteht.

Auf diesen Löteinsatz 10 wird vorzugsweise auf die Kontaktflächen mit dem Substrat 4 des Bauteils 1 vor dem Löten eine Lötschicht 15 aus einem Lötwerkstoff 13 aufgebracht. Vorzugsweise wird diese Lötschicht 15 vorher gesintert. Danach wird der Löteinsatz 10 mit der Lotschicht 13 zusammen mit dem Löteinsatz 10 in die Mulde 31 eingebracht und in einem Ofen bei höheren Temperaturen behandelt, so dass der Lötvorgang stattfindet und der Löteinsatz 10 sich mit dem Substrat 4 verbindet. Ein Lötwerkstoff 13 hat immer eine geringere Schmelztemperatur als das Substrat 4 und als der Löteinsatz 10.

Diese ersten Verfahrensschritte können vorzugsweise auch anders durchgeführt werden, nämlich, dass ein Löteinsatz 10 in die Mulde 31 eingebracht wird und das Lot 14 auf dem Bereich des Spalts auf der Höhe der Oberfläche 16 aufgebracht wird und erst durch eine Temperaturbehandlung in den Spalt 25 zwischen Löteinsatz 10 und Substrat 4 hineinläuft, da es bei der Löttemperatur aufschmilzt (Fig. 3).

Weitere Lötverfahren von Löteinsatz 1 und Substrat 4 sind denkbar, wie sie aus dem Stand der Technik bekannt sind.

Entsprechend der Kontur der Lötstelle 7 ist auf der Oberfläche 6 des Substrats 4 eine umlaufende Lötnaht vorhanden.

Auf jeden Fall wird in einem weiteren Schritt (Fig. 2) der Spalt 25 auf Höhe der äußeren Oberfläche 16 des Bauteils 1 geschweißt. Dabei entsteht eine Schweißstelle 19 oder eine Schweißnaht 19 auf dem Lot und in dem Substrat 4.
Das Schweißen kann durch reines Umschmelzen des Substrats 4 und des Löteinsatzes 10 oder auch Schweißen mit Materialzufuhr erfolgen.

Vorzugsweise ist die Schweißnaht 19 mindestens doppelt so breit wie der Spalt 25, so dass hier eine Abschirmung des Lötwerkstoffes 13 im Spalt zur Oberfläche 16 hin durch Verlängerung des Diffusionsweges vom Material aus der Lötschicht 25 in die MCrAlX-Schicht gegeben ist.
Die maximale Breite der Schweißnaht 19 beträgt 3mm.

Vorzugsweise wird die Oberfläche 16 im Bereich der Schweißstelle 19 oder Schweißnaht 19 geglättet.

Optional wird in einem zumindest weiteren Verfahrensschritt auf diese Oberfläche 16 mit der Schweißstelle 19 eine Schicht 22, insbesondere eine MCrAlX-Schicht, auch über den Löteinsatz 10 mit der Schweißnaht 19 hinaus aufgebracht.

Da die Lötschicht 13 oft Schmelzpunkterniedriger aufweist, die im Stand der Technik oft an einer Kontaktfläche mit der Schicht 22 in die Schicht 22 hinein diffundieren können und dort zu Schädigungen führen, führt das Umschmelzen mit dem Werkstoff des Substrats 4 oder dem zumindest einen schmelzpunkterniedrigerfreien Schweißzusatzwerkstoff zu einer Abschirmung dieser Schmelzpunkterniedriger im Bereich der Schweißstelle 19, da dann keine Diffusion mehr von der Lötschicht 13 direkt in die Schicht 22 erfolgen kann.

Weitere Vorteile des Verfahrens sind:
- Sehr gute mechanische Eigenschaften von gelöteten Stellen
- Keine Diffusion von temperatursenkenden Elementen (wie z. B. Bor) in die überliegende MCrAlX-Schutzschicht, die höheren Temperaturen ausgesetzt ist als das Substrat und dadurch keine Verringerung der Korrosionsschutzfunktion der Schicht.
- Es können beliebige Grundwerkstoff/Löteinsatzwerkstoff-Kombinationen eingesetzt werden und damit können die mechanischen Eigenschaften der reparierten Schaufeln verbessert werden.
- Der benötigte Arbeitsaufwand bei der Reparatur von großflächigen Bereichen, die mit Rissen betroffen sind und zurzeit mittels Schleifen und Auftragschweißen repariert werden, kann durch Einsatz von solchen Reparaturverfahren wesentlich reduziert werden. Damit können Kostenersparnisse bei der Reparatur erzeugt werden, z. B. bei Reparatur von Anstreifschäden im Plattformbereich von Leitschaufeln.
- Technisch realisierbar sind fast alle Schaufelgrundwerkstoffe, die zurzeit auf dem Markt verfügbar sind, als Löteinsatzwerkstoff einzusetzen.
- Die Reparatur von beschädigten Stellen wird mit sehr hoher Präzision und geringer Toleranz durchgeführt, so dass der Aufwand beim späteren Wiederherstellen der Kontur wesentlich reduziert wird.
- Mit diesem Reparaturverfahren wird es möglich betriebsbeanspruchte Schaufeln zu reparieren, die aufgrund der nicht zu reparierenden Fehleranzeige derzeit als Ausschuss betrachtet werden. Damit können die Ausschussquoten von betriebsbeanspruchten Schaufeln deutlich reduziert werden und auch damit verbundene Reparaturkosten insgesamt.

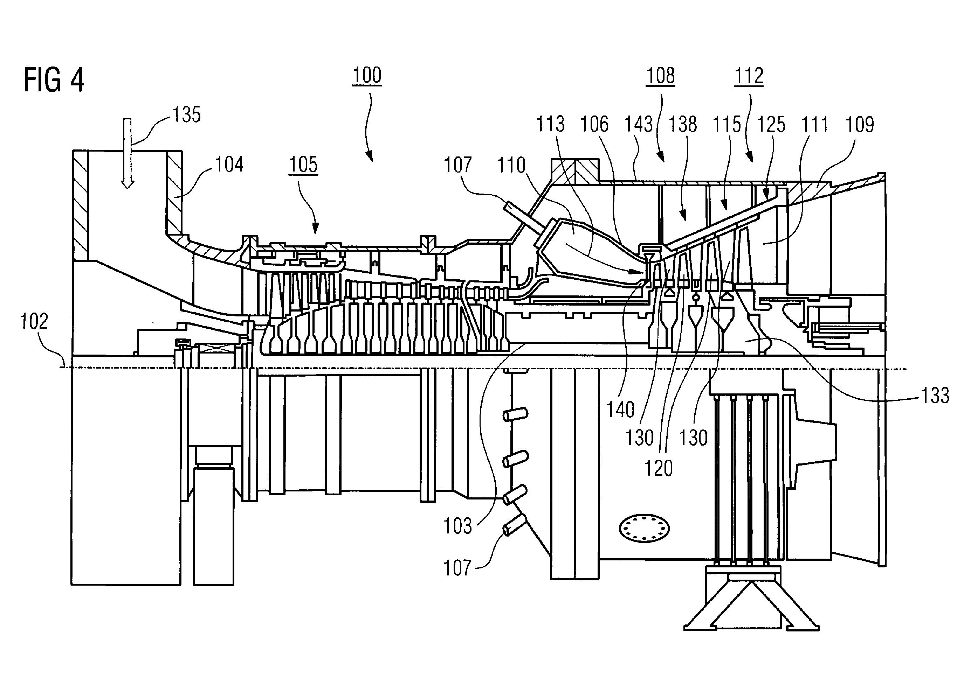

Die Figur 4 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 6 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Verfahren zur Reparatur eines Substrats (4) eines Bauteils (1, 120, 130, 155),
bei dem das Substrat (4) eine Mulde (31) aufweist,
in die (31) ein Löteinsatz (10) eingebracht wird,
der (10) durch einen Lötwerkstoff (13) in einem Spalt (25) mit dem Substrat (4) verbunden ist,
**dadurch gekennzeichnet, dass**
der Spalt (25) zwischen dem Löteinsatz (10) und dem Substrat (4) auf Höhe der Oberfläche (16) des Substrats (4) geschweißt wird,
so dass eine Schweißstelle (19) oder Schweißnaht (19) auf Höhe der Oberfläche (16) entsteht.

2. Verfahren nach Anspruch 1,
**dadurch gekennzeichnet, dass**
auf dem Löteinsatz (10) eine Lotschicht (15) aus dem Lötwerkstoff (13) aufgebracht wird,
bevor der Löteinsatz (10) mit der Lotschicht (15) in die Mulde (31) eingebracht wird.

3. Verfahren nach Anspruch 1,
**dadurch gekennzeichnet,**
**dass** der Löteinsatz (10) zuerst in die Mulde (31) eingebracht wird, und
**dass** anschließend ein Lötwerkstoff (14) in den Spalt (25) hineingebracht wird,
insbesondere durch Aufschmelzen.

4. Verfahren nach Anspruch 1,
**dadurch gekennzeichnet, dass**
die Schweißstelle (19),
insbesondere vor dem Aufbringen einer Schicht (22), bearbeitet wird,
insbesondere geglättet wird.

5. Verfahren nach Anspruch 1, 2, 3 oder 4,
**dadurch gekennzeichnet, dass**
eine Schicht (22),
insbesondere eine MCrAlX-Schicht (22),
auf das Substrat (4) mit dem Löteinsatz (10) und der Schweißnaht (19) aufgebracht wird.

6. Verfahren nach Anspruch 1,
**dadurch gekennzeichnet, dass**
die Schweißstelle (19) oder die Schweißnaht (19) in der Breite (b) mindestens doppelt so breit ist wie der Spalt (25).

7. Bauteil (1, 120, 130, 155),
insbesondere hergestellt durch ein Verfahren nach einem oder mehreren der Ansprüche 1 bis 6,
das (1, 120, 130, 155) ein Löteinsatz (10) aufweist,
der (10) durch ein Lötwerkstoff (13) mit einem Substrat (4) des Bauteils (1, 120, 130, 155) verbunden ist,
wobei eine Schweißstelle (19) oder einer Schweißnaht (19) im Bereich der äußeren Oberfläche (16) auf dem Lötwerkstoff (13) vorhanden ist.

8. Bauteil nach Anspruch 7,
**dadurch gekennzeichnet, dass**
die Schweißstelle (19) oder die Schweißnaht (19) geglättet ist.

9. Bauteil nach Anspruch 7 oder 8
**dadurch gekennzeichnet, dass**
eine Schicht (22),
insbesondere eine MCrAlX-Schicht (22),
auf dem Löteinsatz (10) mit der Schweißstelle (19) oder Schweißnaht (19) vorhanden ist.
